# EUROPÄISCHE PATENTSCHRIFT

(11) **EP 0 344 651 B1**
(45) Veröffentlichungstag und Bekanntmachung des Hinweises auf die Patenterteilung: **31.03.1993**
(21) Anmeldenummer: 89109577.0
(22) Anmeldetag: 27.05.1989
(51) Int. Cl.: A23C 19/093, A23C 9/13, A23D 7/00

(54) **Verfahren zur Herstellung eines Nahrungsmittels**
Process for preparing a foodstuff
Procédé de préparation d'un produit alimentaire

(30) Priorität: 31.05.1988 DE 3818421; 21.04.1989 DE 3913125
(43) Veröffentlichungstag der Anmeldung: 06.12.1989
(73) Patentinhaber: Maroudas, Johann, 30165 Hannover (DE)
(72) Erfinder: Maroudas, Johann, 30165 Hannover (DE)

(56) Entgegenhaltungen:
- DE-A- 1 692 675
- FR-A- 1 351 868
- FR-A- 2 407 673
- GB-A- 574 389
- GB-A- 1 487 680
- GB-A- 2 192 528
- US-A- 1 434 048
- US-A- 1 676 138
- US-A- 3 310 406

## Beschreibung

Die Erfindung betrifft ein Verfahren zur Herstellung eines Nahrungsmittels, das insbesondere als ein Brotaufstrich, cremige Speise und/oder ein Grundstoff für die Herstellung von Spezialitäten verwendbar ist, bestehend vorwiegend aus Milcheiweiß, Spelseöl und Wasser, bei dem man Quark, Joghurt und andere Milcheiweiß in flockiger Form enthaltende Stoffe entwässert und zu dem erhaltenen entwässerten Produkt ein Speiseöl zufügt.

Ein derartiges Verfahren ist z.B. aus der US-A-1 676 138 bekannt.

Der Wunsch, Milcheiweiß und Speiseöl zu einem als butter- oder margarineähnlichen Brotaufstrich benutzbaren Nahrungsmittel zusammenzubringen, mochte früher auf kalkulatorischen Erwägungen beruht haben: Quark und Speiseöl waren viel billiger als Butter und auch als Margarine, die man aus einem Gemisch von sonstigen tierischen Fetten und gehärteten Pflanzenfetten mit Wasser herstellte. Heute, wo man den Wert ungesättigter Fettsäuren in Pflanzenölen und den Wert von Eiweiß für die menschliche Ernährung in einer Wohlstandsgesellschaft erkannt hat, will man hiermit das Bedürfnis nach einer gesundheitsfördernden Nahrung befriedigen.

Milcheiweiß und Speiseöle, insbesondere solche mit einem hohen Anteil an ein- oder mehrfach ungesättigten Fettsäuren, lassen sich nicht zu einer festen Verbindung zusammenbringen. Sie bilden eine mehr oder weniger stabile Emulsion, die schlecht lagerfähig und oft nicht tiefkühlfähig ist und die deshalb weiterer Hilfsmittel bedarf, um die Stabilität, Lagerfähigkeit und Haltbarkeit zu erhöhen.

Die US-A-1 676 738 benutzt gehärtete Pflanzenöle. Die US-A-3 310 406, die Pflanzenöle mit ungesättigten Fettsäuren einsetzt, benutzt Bindemittel wie Stärke und Metallsalze als Emulgatoren, die GB-A-574 389 Lecithin und Mono- oder Diglyceride. Die DE-A-1 692 675 benutzt angehärtete Pflanzenöle, tierische Fette und Bindemittel in Form von Gelatine, Agar-Agar u.a.

Bindemittel verändern und erniedrigen den ernährungsphysiologischen Wert dieses Nahrungsmittels, ebenso der Einsatz tierischer Fette und gehärteter Öle. Der Einsatz von Metallsalzen und ähnlichen Emulgatoren und Stabilisatoren kann direkt gesundheitsschädigend sein.

Butter und Margarine sowie ein Teil der oben genannten Mischungen aus Milcheiweiß und Speiseöl haben einen relativ neutralen Geschmack, andere Mischungen aus Milcheiweiß und Speiseölen, wie eine Mischung aus Sauermilchkäse und Speiseölen, aus Käse und Speisefetten und-ölen (Patent abstracts of Japan C 458 vom 20. Nov. 87 und C 410 vom 14. März 87) und der aus Quark, Gemüse und Speiseöl (DE-A-32 26 756) hergestellte Tsaziki haben dieses nicht.

Die Versuche, ein cremiges Nahrungsmittel aus Milcheiweiß und Speiseöl herzustellen, sind vielfältig, diese Mischungen aber ohne Emulgatoren, Stabilisatoren und Bindemittel stabil, transportfähig, tiefkühl- und lagerfähig zu machen, bisher erfolglos.

Die Erfindung vermeidet die Nachteile des Standes der Technik. Es ist die Aufgabe der Erfindung, ein in einfacher Weise herstellbares, reines Naturprodukt von cremiger bis fester Konsistenz zu schaffen, welches neutral im Geschmack ist und viel Eiweiß und wenig Fettsäuren, und diese noch in ein- oder mehrfach ungesättigter Form enthält, welches stabil, lager- und tiefkühlfähig ist, und welches als Brotaufstrich wie Butter oder Margarine, aber auch als Grundstoff für die Herstellung von Spezialitäten verwendbar ist.

Die Erfindung besteht darin, daß man, ausgehend von dem eingangs genannten Verfahren, ein Speiseöl mit einem hohen Gehalt an ein- oder mehrfach ungesättigten Fettsäuren verwendet und daß man dem Milcheiweiß enthaltenden Stoff nach der teilweisen Entwässerung geringe Mengen Milch und/oder Zitronensäure zufügt, ihn rührt und mit dem Öl in innige Berührung bringt, wonach bzw. wobei man das erhaltene Gemisch einem Rührvorgang unterwirft, bis ein Produkt cremiger bis fester Konsistenz erhalten ist.

Dieses Nahrungsmittel enthält viel Eiweiß, aber nur wenig Fettsäuren. Der Gehalt an Speiseöl kann auf Werte von 4 bis 40 % eingestellt werden, wobei hier Speiseöle mit einem hohen Gehalt an ein- oder mehrfach ungesättigten Fettsäuren zur Verwendung kommen. Eine Härtung der Speiseöle ist hier völlig überflüssig. Nickel- oder andere Katalysatoren, Emulgatoren und Stabilisatoren brauchen nicht in Anwendung gebracht zu werden. Es handelt sich bei diesem Nahrungsmittel vielmehr um ein reines Naturprodukt, dessen Zutaten nicht chemisch verändert werden müssen, um die gewünschte cremige bis feste Konsistenz zu erhalten. Dadurch hat dieses Naturprodukt einen besonders hohen Ernährungswert. Es kann als Brotaufstrich ebenso verwendet werden wie als cremige Speise und/oder als Speisegrundstoff für die Herstellung verschiedenster Spezialitäten.

Die Zugabe von Milch nach der Entwässerung vor oder bei der Zugabe des Pflanzenöles in einen teilweise entwässerten, Milcheiweiß enthaltenden Stoff erscheint auf den ersten Blick widersinnig, ist aber das Mittel für das Hervorrufen der unerwartet innigen Verbindung der sonst von Natur aus sich nicht mischenden, sondern vielmehr entmischenden Grundstoffe. Es genügen 2 bis 4 % Milch oder Spuren von Zitronensäure. Diese Stoffe wirken wie ein Katalysator. Bei der Herstellung rührt man zweckmäßigerweise so lange, bis der wesentliche Teil der gerührten Masse in eine so innige Verbindung wie eine chemische Verbindung, eventuell Anlagerungsverbindung, zwischen Eiweißmolekülen und Ölmolekülen eingegangen ist.

Es hat sich gezeigt, wenn ein im Verhältnis 1:5 bis 1:7 abgetropftes Ausgangsprodukt (Joghurt, Dickmilch, Kefir, Quark o.ä) mit 4 bis 40 % Speiseöl vermischt wird, das erhaltene Produkt lange frisch bleibt und die verschiedenen Bakterien des Ausgangsproduktes sogar wiederbelebbar bleiben, was für die Weiterverarbeitung von Wichtigkeit sein kann.

Wenn das Wasser der Molke beim Transport oder weiterer Entwässerung oder auch durch Tiefkühlen entfernt wird, können aus Milcheiweißmolekülen bestehende Massen so verändert werden, daß sie nach dieser Behandlung nicht mehr zu regenerieren sind, die Masse wird pappig und ungenießbar. Anders beim Zusatz von Speiseöl in der erfindungsgemäßen Art: Durch Homogenisierung bzw. Hydrogenisierung des Ausgangsproduktes mit Speiseöl bleibt die Eiweißmolekülmasse unterstört und das dafür notwendige Wasser im Molekül erhalten. Dadurch ist das erfindungsgemäße Produkt beständig. So kann man die erhaltene erfindungsgemäße Grundmasse in allen Eigenschaften des Ausgangsproduktes Monate später wieder bakteriell beleben, am besten mit dem einfachen Zusatz von Milch und entsprechender Wärme, so daß man dann ein Produkt wie frischen Joghurt, Kefir, Quark u.a. erhält.

Den gewünschten Grad der Viskosität des Produktes erhält man zweckmäßigerweise dadurch, daß man durch Rühren und Zusatz von Milch und/oder Milchpulver, Wasser, Essig, Fleischbrühe die gewünschte cremige oder feste Konsistenz einstellt.

Es hat sich herausgestellt, daß man umso mehr Öl zufügen muß, je weniger man entwässert hat.

Benutzt man das Produkt als Grundstoff, so kann man Nahrungsmittel der verschiedensten Geschmacksrichtungen schaffen, die durch ihre cremige Konsistenz als besonders fein empfunden werden. Bei der Herstellung dieser Spezialitäten geht man so vor, daß man nach oder während des Rührvorganges, bei dem das entwässerte Milcheiweiß die Verbindung mit dem Speiseöl eingeht, die Zutaten zufügt, insbesondere
- Zucker und eventuell als weitere Zutaten Kakao, Früchte, Nüsse, Malz, Getreideprodukte, Geschmacksstoffe,
- Fruchtzucker und/oder Dextrose, eventuell ebenfalls mit weiteren Zutaten,
- Früchte, insbesondere in zerkleinerter, getrockneter, gemahlener oder pulverisierter Form, aber auch als Marmelade, Gelee, roh, gekocht oder kandiert,
- Gemüse, insbesondere in zerkleinerter, roher, gekochter oder getrockneter, gemahlener, pulverisierter Form.
- Käse, insbesondere in zerkleinerter, getrockneter, gemahlener, pulverisierter Form,
- Fleisch oder Fleischwaren in den verschiedensten Formen.

Diese Spezialitäten zeichnen sich sämtlich durch ihre cremige Konsistenz als geschmacklich weiche hervorragend aromatische Nahrungsmittel aus.

Die süße Geschmacksrichtung durch Zufügung von Zucker führt zu Desserts und süßen Brotaufstrichen, wie sie insbesondere von Kindern gern verzehrt werden.

Die Zutat Fruchtzucker und/oder Dextrose führt zu süßen Brotaufstrichen, die hervorragend für Diabetiker geeignet sind.

Die Zufügung von Früchten in der verschiedensten Form führt einerseits zu Desserts, andererseits ebenfalls zu Brotaufstrichen, die im Gegensatz zu Marmelade rohe Früchte enthalten können und daher sich durch einen besonderen Ernährungswert wegen der den Früchten innewohnenden Vitamine auszeichnen.

Die Zufügung von Kräutern und Gemüse führt einerseits zu Nahrungsmitteln, die als Salate serviert werden können, andererseits aber als Brotaufstrich den Kräuterkäse-und Kräuterquark-Zubereitungen durch die besonders cremige Konsistenz überlegen sind.

Eine besondere Bedeutung hat die Verwendung von Käse als Zutat: Hier können Käsereste in der verschiedensten Art aufbereitet werden und dem cremigen Grundstoff zugefügt werden. Diese Käsereste können geraspelt sein, sie können getrocknet und anschließend bis zu Pulverform zerkleinert sein Sie können auch geschnitzelt sein. Das mit dieser Zutat Käse erhaltene cremige Produkt hat die Konsistenz und den Geschmack eines guten Schmelzkäses,ohne daß hier Schmelzsalze in das Produkt eingebracht wären.

Aber auch die Zufügung von Fleisch oder Fleischprodukten eröffnet ganz neue Anwendungsgebiete, weil auch hier Fleischreste ebenso wie getrocknetes Fleisch verwendet werden können.

Eine billige Art der Herstellung eines weiteren Aufstriches ist die Zufügung verschiedener Bakterien, die zu einer Aromatisierung im Geruch und Geschmack führt, z.B. durch Zusatz von Lipase, diversen Käsebakterien u.a.

Das erhaltene cremige Produkt kann aber auch als Grundstoff für eine Reihe von weiteren Nahrungsmitteln benutzt werden: Es ist die Herstellung mayonnaiseartiger Nahrungsmittel möglich, es können dickflüssige, cremige Saucen und Suppen mit diesem Grundstoff hergestellt werden.

Dabei sind cholesterinfreie oder zumindest -arme Produkte hergestellt, reine Naturprodukte ohne Schmelzsalze, Härtungsmittel, Nickelkatalysatoren und sonstige als gesundheitsschädlich angesehene Mittel. Die Produkte zeichnen sich durch gute Haltbarkeit auch ohne Konservierungsstoffe aus. Sie sind preiswert herstellbar, zeichnen sich durch Eiweißreichtum und Fettarmut aus und sind auch als Diätkost hervorragend verwendbar.

Für die Herstellung einer besonders herzhaften Dessertspeise, die aber auch als Brotaufstrich verwendbar ist, ist es zweckmäßig, wenn man als Öl rohes Sesamöl, Nußöl, Erdnußöl, auch mit Zusatz von Schrot dieser Ölsorten, verwendet und während des Rührens Zucker zufügt.

Die Herstellung dieses Nahrungsmittels gelingt umso besser, wenn Speiseöle mit einem hohen Gehalt an ein- oder mehrfach ungesättigten Fettsäuren zur Verwendung kommen. Es sind daher für die Herstellung pflanzliche Öle zu verwenden. Die Verwendung tierischer Öle und Fette, aber auch gehärteter Pflanzenfette führt nicht zu dem gewünschten Ergebnis.

Jedoch läßt sich das mit ungesättigten Ölen hergestellte erfindungsgemäße Produkt nach seiner Herstellung mit gesättigten Fettsäuren und festen Fetten, wie Butter, Margarine u.a. mischen, insbesondere auch mit Margarinerohstoffen. Zum Unterschied von Margarine jedoch kann dieses Produkt lebende Bakterien enthalten und dadurch in seinen Ernährungseigenschaften vorteilhafter sein.

Es spielen sich bei der Ausführung des erfindungsgemäßen Verfahrens Anlagerungsreaktionen ab, wobei der entwässerte, Milcheiweiß enthaltende Stoff in einer merkwürdigen Weise geändert wird:
Entwässert man Quark, Joghurt, Kefir oder andere Milcheiweiß in flockiger Form enthaltende Stoffe und lagert sie, so gelingt es nie wieder, durch Zufügen von Wasser oder Milch das ursprüngliche Produkt Quark, Joghurt oder Kefir wieder herzustellen. Während der Entwässerung und der Lagerung wird das Mllcheiweiß so verändert und geschädigt, daß eine Wiederherstellung nicht möglich ist. Daher kann man diese entwässerten Produkte nur für die Käseherstellung benutzen. Hat man jedoch unmittelbar nach der Entwässerung Öl zugefügt und den entwässerten, Milcheiweiß enthaltenden Stoff mit dem Öl gerührt, so daß eine innige Vermischung stattgefunden hat, ergibt sich ein ganz anderes, überraschendes Bild, man findet nämlich, daß man durch das Zufügen von Milch, insbesondere entrahmter Milch, wieder zu einem im Aussehen, in der Konsistenz und im Geschmack gleichwertiges Produkt wie das Ausgangsprodukt gelangt, wenn man dieses Produkt vor dem Verzehr nochmals 6 und mehr Stunden lagern läßt.

Überraschenderweise eröffnet somit das erfindungsgemäße Produkt auch eine zweite Anwendungsweise, nämlich Milchprodukte billiger zu transportieren und gleichzeitig länger lagerfähig zu machen. Man kann hierbei so vorgehen, daß man dem Milchprodukt 50 % seines Gewichtsanteiles oder mehr Wasser entzieht, es erfindungsgemäß mit Speiseöl in nicht zu großem Anteil mischt, es dann lagert und transportiert und anschließend Milch in jeder Form oder in Form einer aus Trockenmilch und Wasser bereiteten Milch, anstelle des entzogenen Wassers bis zu 25 % und mehr zusetzt und dann das Ganze innig miteinander mischt und vor dem Verzehr stehenläßt.

Bei diesem Verfahren wird das Gewicht des Milchproduktes um etwa 50 % bis 70 % und ebenfalls sein Volumen um einen ähnlichen Betrag reduziert. Das verbilligt den Transport in Länder, in denen Milch nicht in genügender Menge zur Verfügung steht, um etwa die Hälfte des Transportpreises. Überraschenderweise hat es sich gezeigt, daß das auf diese Weise in seinem Gewicht und seinem Volumen reduzierte Milchprodukt länger haltbar ist als das unbehandelte Milchprodukt, auch bei höheren Lagertemperaturen. Somit wird auch die Möglichkeit erzielt, dieses Produkt auch ohne Einsatz einer Kühlung zu transportieren. Das setzt die Transportkosten wiederum erheblich herab.

Es ist aber auch Tiefkühlung und längere Lagerung möglich. Nach Tiefkühlung und längerer Lagerung ist der Zusatz von lebenden Bakterien zur Wiederbelebung der Masse möglich.

Der Zusatz von einfachem Wasser jedoch reicht nicht aus, um zu dem ursprünglichen Produkt wieder zu gelangen. Es muß Milch, insbesondere entrahmte Milch, sein. Diese kann auch, was für den Transport in südliche Länder mit zu geringer Milchproduktion besonders vorteilhaft ist, eine aus entrahmter Trockenmilch bestehende Milch sein.

Als besonders vorteilhaft hat es sich herausgestellt, wenn man dem entwässerten, Milcheiweiß enthaltenden Stoff 3 bis 10 Gewichtsprozent Öl zufügt und ihn rührt, dieses Produkt lagert und/oder transportiert, und dann dem Produkt Milch, insbesondere entrahmte Milch, auch in sterilisierter oder pasteurisierter oder konzentrierter Form, eventuell aus Milchpulver hergestellt, unter Rühren zufügt und das Produkt dann vor dem Verzehr nochmals 6 und mehr Stunden lagern läßt, um auf das ursprüngliche Produkt zu kommen, oder wenn man dem gelagerten und transportierten Produkt unter Rühren weiteres Öl zufügt, um zu dem Brotaufstrich oder dem Grundstoff für die Herstellung von Nahrungsmittelspezialitäten zu kommen.

Durch die Erfindung wird somit ein Nahrungsmittel geschaffen, das sich als diätetisches Nahrungsmittel wegen seines geringen Geholtes an Fettsäuren und seines hohen Gehaltes an Eiweiß einsetzen läßt, welches ohne Zusatz von Konservierungsstoffen bei Normal temperatur mindestens 10 bis 14 Tage lagerfähig ist und welches sich in einer Vielzahl von Möglichkeiten anwenden läßt. Die Anwendungsmöglichkeiten bestehen in drei großen Gruppen, nämlich der Herstellung eines fettarmen, eiweißreichen Brotaufstriches von neutralem Geschmack, der Butter und Margarine ersetzen kann, in einem Grundstoff für die Herstellung von Nahrungsmittelspezialitäten und der dritten Möglichkeit des verbilligten Transportes in milcharme, vorzugsweise südliche Länder. Unter den Nahrungsmittelspezialitäten sind besonders ein Nuß-Nougat-Creme zu erwähnen, welcher aus dem abgetropften oder entwässerten, milcheiweiß enthaltenden Stoff durch Zufügung von insbesondere Nußölen, Palmölen und Sesamöl herstellbar ist, sowie der Käsespezialität, die aus dem Grundstoff und geriebenen Altkäsestücken hergestellt wird, welche in anderer Weise lediglich zur Herstellung von Schmelzkäse verwendet werden können. Durch diese Möglichkeit werden geschmacklich hervorragende Käsespezialitäten erzeugbar.

Das Besondere an dem erfindungsgemäßen Nahrungsmittel ist nicht nur die Vielfalt seiner Verwendungsmöglichkeiten, sondern vor allem die Naturbelassenheit der Produkte. Es sind keine Konservierungsstoffe erforderlich, es finden sich keine Katalysatorrückstände von Schwermetallen und keine Salze, wie bei der Schmelzkäsezubereitung in den erfindungsgemäß hergestellten Produkten.

## Patentansprüche

1. Verfahren zur Herstellung eines Nahrungsmittels, das insbesondere als ein Brotaufstrich, cremige Speise und/oder ein Grundstoff für die Herstellung von Spezialitäten verwendbar ist,
bestehend vorwiegend aus Milcheiweiß, Speiseöl und Wasser, bei dem man Quark, Joghurt und andere Milcheiweiß in flockiger Form enthaltende Stoffe entwässert und zu dem erhaltenen entwässerten Produkt ein Speiseöl zufüfgt,
dadurch gekennzeichnet,
daß man ein Speiseöl mit einem hohen Gehalt an ein- oder mehrfach ungesättigten Fettsäuren verwendet und
daß man dem Milcheiweiß enthaltenden Stoff nach der teilweisen Entwässerung geringe Mengen Milch und/oder Zitronensäure zufügt, ihn rührt und mit dem Öl in innige Berührung bringt, wonach bzw. wobei man das erhaltene Gemisch einem Rührvorgang unterwirft, bis ein Produkt cemiger bis fester Konsistenz erhalten ist.

2. Verfahren nach Anspruch 1,
dadurch gekennzeichnet,
daß man durch weiteres Rühren und weiteren Zusatz von Milch und/oder Milchpulver, Wasser, Essig, Fleischbrühe o.a. eine gewünschte cremige Konsistenz einstellt.

3. Verfahren nach Anspruch 1,
dadurch gekennzeichnet,
daß man nach oder während des Rührvorganges Zutaten zufügt,
insbesondere
- Zucker und eventuell als weitere Zutaten Kakao, Früchte, Nüsse, Malz, Getreideprodukte, Geschmacksstoffe,
- Fruchtzucker und/oder Dextrose, eventuell ebenfalls mit weiteren Zutaten,
- Früchte, insbesondere in zerkleinerter, getrockneter, gemahlener oder pulverisierter Form, aber auch als Marmelade, Gelee, roh oder gekocht
- Gemüse, insbesondere in zerkleinerter, roher, gekochter oder getrockneter, gemahlener, pulverisierter Form,
- Käse, insbesondere in zerkleinerter, getrockneter, gemahlener, pulverisierter Form,
- Fleisch oder Fleischwaren in den verschiedensten Formen.

4. Verfahren nach Anspruch 1,
dadurch gekennzeichnet,
daß man als Öl rohes Sesamöl, Nußöl, Erdnußöl, auch mit Zusatz von Schrot dieser Ölsorten, verwendet und während des Rührens Zucker zufügt.

5. Verfahren nach Anspruch 1,
dadurch gekennzeichnet,
daß man umso mehr Öl zufügt, je weniger man entwässert hat.

6. Verfahren nach Anspruch 1,
dadurch gekennzeichnet,
daß man das Gemisch aus dem mit Milch und/oder Zitronensäure versetztem Milcheiweiß in flockiger Form und Speiseöl durch eine Düse auspreßt und vorzugsweise das ausgepreßte Produkt weiter rührt.

7. Verfahren nach Anspruch 1,
dadurch gekennzeichnet,
daß man dem entwässerten, Milcheiweiß enthaltenden Stoff 3 bis 10 und mehr Gewichtsprozent Öl zufügt und ihn rührt, dieses Produkt lagert und/oder transportiert und dann dem Produkt Milch, insbesondere entrahmte Milch, auch in sterilisierter oder pasteurisierter oder konzentrierter Form, eventuell aus Milchpulver hergestellt, unter Rühren zufügt, und das Produkt dann vor dem Verzehr nochmals 6 und mehr Stunden lagern läßt, oder dann dem Produkt unter Rühren weiteres Öl zufügt.

8. Verfahren nach Anspruch 1,
dadurch gekennzeichnet,
daß man die Entwässerung in einer Zentrifuge mit niedriger Geschwindigkeit vornimmt.

9. Verfahren nach Anspruch 1,
dadurch gekennzeichnet,
daß man das in üblicher Weise durch Erhitzung haltbar gemachte Endprodukt durch Zusatz von Bakterien wiederbelebt.

## Claims

1. A process for the production of a foodstuff which can be used in particular as a sandwich spread, creamy food and/or as a base for the production of specialities, consisting mainly of milk protein, edible oil and water, wherein curd, yoghurt and other substances containing milk protein in flocculent form are dehydrated and an edible oil is added to the dehydrated product thus obtained, characterised in that an edible oil having a high content of monounsaturated or polyunsaturated fatty acids is used and in that following the partial dehydration, small quantities of milk, and/or citric acid are added to the substance containing milk protein, the substance is stirred and is brought into intimate contact with the oil, whereupon or at which time the mixture thus obtained is subjected to a stirring operation until a product of creamy to solid consistency is obtained.

2. A process as claimed in Claim 1, characterised in that a desired, creamy consistency is set by further stirring and further addition of milk and/or milk powder, water, vinegar, meat stock or the like.

3. A process as claimed in Claim 1, characterised in that after or during the stirring operation ingredients are added, in particular
- sugar and optionally, by way of further ingredients, cocoa, fruits, nuts, malt, cereal products, flavourings,
- fructose and/or dextrose, optionally likewise with further ingredients,
- fruits, in particular in crushed, dried, ground or powdered form, but also in the form of jam, jelly, raw or cooked,
- vegetables, in particular in crushed, raw; cooked or dried, ground, powdered form,
- cheese, in particular in crushed, dried, ground, powdered form,
- meat or meat products in all forms.

4. A process as claimed in Claim 1, characterised in that untreated sesame oil, nut oil, peanut oil, also with the addition of grouts of these types of oils, are used as oil and sugar is added during the stirring operation.

5. A process as claimed in Claim 1, characterised in that proportionately more oil is added, the less dehydration has taken place.

6. A process as claimed in Claim 1, characterised in that the mixture consisting of the milk protein in flocculent form mixed with milk and/or citric acid and of the edible oil are pressed through a nozzle and the pressed product is preferably further stirred.

7. A process as claimed in Claim 1, characterised in that 3 to 10 and more percent by weight of oil is added to the dehydrated substance containing milk protein and is stirred therein, this product is stored and/or transported and then milk, in particular skimmed milk, also in sterilized or pasteurized or concentrated form, optionally produced from milk powder, is added to the product with stirring, whereupon the product is stared again for 6 and more hours prior to consumption or whereupon further oil is added to the product with stirring.

8. A process as claimed in Claim 1, characterised in that the dehydration is carried out in a centrifuge at a low speed.

9. A process as claimed in Claim 1, characterised in that the end product, which has been conserved in the usual way by heating, is regenerated by the addition of bacteria.

## Revendications

1. Procédé de préparation d'un produit alimentaire qui est utilisable en particulier comme pâte à tartiner, entremets crémeux et/ou base pour la préparation de spécialités,
constitué essentiellement de lactalbumine, d'huile de table et d'eau, dans lequel on déshydrate des produits contenant du fromage blanc, du yaourt et d'autres lactalbumines sous forme floconneuse et l'on ajoute une huile de table au produit déshydraté obtenu,
caractérisé en ce qu'on utilise une huile de table ayant une teneur élevée en acides gras mono- ou polyinsaturés, et en ce qu'on ajoute au produit contenant la lactalbumine, après la déshydratation partielle, de faibles quantités de lait et/ou d'acide citrique, en ce qu'on l'agite et en ce qu'on le met en contact étroit avec l'huile, opération après ou pendant laquelle on soumet le mélange obtenu à un processus d'agitation jusqu'à obtention d'un produit de consistance crémeuse à solide.

2. Procédé selon la revendication 1, caractérisé en ce qu'en agitant encore et en ajoutant encore du lait et/ou de la poudre de lait, de l'eau, du vinaigre, du bouillon de viande ou d'autres matières, on établit la consistance crémeuse désirée.

3. Procédé selon la revendication 1, caractérisé en ce qu'après ou pendant le processus d'agitation on ajoute des ingrédients, en particulier
- du sucre et éventuellement, comme autres ingrédients, du cacao, des fruits, des noix, du malt, des produits céréaliers, des agents de sapidité,
- du fructose et/ou du dextrose, éventuellement avec d'autres ingrédients,
- des fruits, en particulier sous forme réduite en morceaux, séchée, broyée ou pulvérisée, mais également sous forme de marmelade, de gelée, à l'état cru ou cuit,
- des légumes, en particulier sous forme réduite en morceaux, crue, cuite ou séchée, broyée, pulvérisée,
- du fromage, on particulier sous forme réduite en morceaux, séchée, broyée, pulvérisée,
- de la viande ou des produits à base de viande sous les formes les plus différentes.

4. Procédé selon la revendication 1, caractérisé en ce qu'on utilise comme huile de l'huile de sésame, de noix ou d'arachide brute, en ajoutant également des grains égrugés correspondant à ces variétés d'huile, et en ce qu'on ajoute du sucre tout en agitant.

5. Procédé selon la revendication 1, caractérisé en ce qu'on ajoute d'autant plus d'huile qu'on a moins déshydraté.

6. Procédé selon la revendication 1, caractérisé en ce qu'on exprime le mélange de lactalbumine sous forme floconneuse mélangée avec du lait et/ou de l'acide citrique, et d'huile de table, à travers une buse et, de préférence, en ce qu'on agite encore le produit exprimé.

7. Procédé selon la revendication 1, caractérisé en ce qu'on ajoute au produit déshydraté contenant de la lactalbumine, de 3 à 10% en poids et plus d'huile, et en ce qu'on l'agite, en ce qu'on conserve ce produit et/ou qu'on le transporte, puis en ce qu'on ajoute au produit du lait, en particulier du lait écrémé, également sous forme stérilisée, panteurisée ou concentrée, éventuellement préparé à partir de lait en poudre, tout en agitant, puis en ce qu'on laisse encore reposer le produit pendant 6 heures et plus avant consommation, ou en ce qu'on ajoute encore une quantité supplémentaire d'huile au produit tout en agitant.

8. Procédé selon la revendication 1, caractérisé en ce qu'on procède à la déshydratation dans une centrifugeuse à basse vitesse.

9. Procédé selon la revendication 1, caractérisé en ce qu'on revitalise par addition de bactéries le produit final rendu apte à la conservation par chauffage de manière habituelle.
